Europäisches Patentamt

European Patent Office

Office européen des brevets

(19)

(11) **EP 1 571 571 A1**

(12) **EUROPÄISCHE PATENTANMELDUNG**

(43) Veröffentlichungstag:
07.09.2005  Patentblatt 2005/36

(51) Int Cl.⁷: **G06F 17/60**, G06F 17/30

(21) Anmeldenummer: 04004881.1

(22) Anmeldetag: 02.03.2004

| | |
|---|---|
| (84) Benannte Vertragsstaaten:<br>**AT BE BG CH CY CZ DE DK EE ES FI FR GB GR**<br>**HU IE IT LI LU MC NL PL PT RO SE SI SK TR**<br>Benannte Erstreckungsstaaten:<br>**AL LT LV MK**<br><br>(71) Anmelder: **Lüttich, Henner**<br>**46569 Hünxe (DE)** | (72) Erfinder: **Lüttich, Henner**<br>**46569 Hünxe (DE)**<br><br>(74) Vertreter: **Menges, Rolf**<br>**Ackmann, Menges & Demski,**<br>**Tonhallenstrasse 16**<br>**47051 Duisburg (DE)** |

(54) **Automatisierte multivariate Priorisierungs- und Selektierungslogik**

(57)   Die Erfindung betrifft ein Verfahren zum automatischen Priorisieren und Selektieren von industriellen oder technischen Ressourcen aus einer Gruppe durch deren simultane Indizierung unter Ausbildung eines Prioritätsindex $I$, wobei die Ressourcen durch mehr als einen Parameter charakterisiert sind und je ein Parametersatz gleichartiger Parameter unterschiedlicher Ressourcen als jeweils ein Unterindex $X_k$ in das Verfahren eingeht und der Prioritätsindex $I$ unter Verdichtung der Unterindices $X_k$ gebildet wird, sowie eine elektronische Datenverarbeitungsanlage und auch einen elektronischen Datenverarbeitungsverband, welche das erfindungsgemäße Verfahren der automatisierten multivariaten Priorisierungs- und Selektierungslogik durchführen.

EP 1 571 571 A1

**Beschreibung**

Die Erfindung betrifft ein Verfahren zum automatischen Priorisieren und Selektieren von industriellen oder technischen Ressourcen aus einer Gruppe durch deren simultane Indizierung unter Ausbildung eines Prioritätsindex I , wobei die Ressourcen durch mehr als einen Parameter charakterisiert sind und je ein Parametersatz gleichartiger Parameter unterschiedlicher Ressourcen als jeweils ein Unterindex $X_k$ in das Verfahren eingeht und der Prioritätsindex I unter Verdichtung der Unterindices $X_k$ gebildet wird, sowie eine elektronische Datenverarbeitungsanlage und einen elektronischen Datenverarbeitungsverband, welche das erfindungsgemäße Verfahren der automatisierten multivariaten Priorisierungs- und Selektierungslogik und Entscheidungslogik durchführt.

Bei einer automatisierten multivariaten Priorisierungs- und Selektierungslogik zur Priorisierung und Selektion von industriellen oder technischen Ressourcen tritt häufig das Problem auf, dass einzelne in die Logik eingehende Regel- und Entscheidungsparameter die zu priorisierende und zu selektierende Größe widersprüchlich bestimmen. Üblicherweise werden hierzu individuelle voneinander abgegrenzte automatisierte Regel- und Entscheidungslogiken miteinander verknüpft, deren Eingangsgröße aus nicht mehr als einem Parameter bestehen. Diese so automatisiert erhaltenen Ergebnisse sind aber nicht unbedingt frei von undefinierten oder ambi- bis multivalenten Zuständen, speziell dann, wenn unterschiedliche Eingangsparameter verschiedener individueller Regel- und Entscheidungslogiken zu entgegengesetzten oder auch widersprüchlichen Ergebnissen führen. Betrachtet man im Kontext des vorliegenden Dokumentes eine Vielzahl unterschiedlicher Regel- und Entscheidungseingangsparameter den numerischen Wert dieser Eingangsparameter als einen Index zur Ordnung der industriellen oder technischen Ressourcen, so können unterschiedliche individuelle Eingangsparameter zu entgegengesetzten Indizierungen führen, was dazu führt, dass eine herkömmliche automatische Regel- und Entscheidungslogik die widersprüchlichen Indizierungen nicht unbedingt gegeneinander aufwägen kann. In so einem Fall entsteht ein undefinierter Zustand, der wie oben erwähnt, ambi- oder auch multivalent sein kann. Bei der automatisierten Priorisierung und Selektierung industrieller und technischer Ressourcen führt dies häufig dazu, dass die automatisierte Logik von deren Verwendern außer Kraft geschaltet wird und eine Entscheidung durch Einschaltung des menschlichen Geistes vorgenommen wird. Diese Vorgehensweise, die nicht mehr automatisch abläuft, ist aber nur bei einer für den menschlichen Geist überschaubaren Menge an unterschiedlichen Regel- und Entscheidungseingangsparametern sinnvoll. Ab einer größeren Zahl unterschiedlicher Regel- und Entscheidungseingangsparameter wird die zu priorisierende oder zu selektierende Größe hierdurch meist von subjektiven und zufallsbedingten menschlichen Entscheidungen dominiert. Sollen durch einen automatischen Priorisierungs- oder Selektierungsprozess industrielle oder technische Ressourcen priorisiert oder selektiert werden, beispielsweise abgegrenzte kleinflächige geographische Gebiete aus einer Vielzahl ähnlich strukturierter geographische Gebiete ausgewählt werden, weil nicht alle geographischen Gebiete die infrage kommen, gleichzeitig als industrielle oder technische Ressource ausgenutzt werden können, so wäre es von Vorteil, wenn ein automatisches System zur Verfügung stände, welches schnell, automatisch und frei von multivalenten Ergebnissen diese Ressourcen nach zur Verfügung stehenden Regel- und Entscheidungseingangsparametern priorisieren oder selektieren könnte, sodass eine Priorisierungs- und Selektierungsentscheidung ohne externe menschliche Kontrolle maschinell getroffen werden kann.

Aufgabe der Erfindung ist es daher, ein Verfahren zum schnellen und automatischen Priorisieren und Selektieren industrieller oder technischer Ressourcen aus einer Gruppe vergleichbarer Ressourcen zur Verfügung zu stellen, welches eindeutige, oder zumindest nicht ambi- oder multivalente Priorisierungen und Selektierungen ermöglicht, wobei die Ressourcen durch eine Vielzahl unterschiedlicher Regel- und Entscheidungseingangsparameter charakterisiert werden und diese in die automatisierte Priorisierungs- und Selektierungsentscheidung einbezogen werden.

Eine weitere Aufgabe der Erfindung ist es, die Zugriffszeit auf Daten von industriellen oder technischen Ressourcen, welche durch eine Vielzahl unterschiedlicher Regel- und Entscheidungseingangsparameter charakterisiert und dadurch indiziert werden, in elektronischen Datenverarbeitungsanlagen so zu optimieren, dass ein schneller Zugriff und eine schnelle Darstellung dieser Daten möglich ist. Schnell im Sinne des Dokumentes bedeutet dabei eine Zeit, die wesentlich kürzer ist, als der Zeit zur Durchführung des Verfahrens entspricht. Indizieren bedeutet im Kontext dieses Dokumentes dabei, dass eine Regel- und Entscheidungseingangsgröße zu einer Ordnung nach den individuellen numerischen Werten der einzelnen charakterisierenden Parameter unterschiedlicher Ressourcen führt.

Die erfindungsgemäßen Aufgaben werden gelöst durch die Bildung eines die $m$ verschiedenen Unterindices $X_k$ zusammenfassenden neuen Datenindex I mit den Einzelelementen $I_i$ als Prioritätsindex durch eine elektronische Datenverarbeitungsanlage, wobei die Bildung die Aufsummierung aller $m$ einzelner Quotienten $Q_{i,k}$ aus je einer Differenz aus einem zu einem Datenpunkt i gehörenden Einzelelement $x_{i,k}$ des Unterindex $X_k$ und Mittelwert $\bar{X}_k$ als Zähler und Standardabweichung $\sigma_{X_k}$ des Unterindex $X_k$ als Nenner gemäß folgender Beziehung aufweist,

$$I_i \ \square \ \sum_{k=1}^{m} f_k \ \frac{x_{i,k} - \overline{X}_k}{\sigma_{X_k}}$$

wobei "$\square$" für "aufweisend den davon rechts stehenden Term", $f_k$ für einen frei wählbaren Unterterm und $Q_{i,k}$ für den Quotient in der Summe steht und der so erhaltene Prioritätsindex als einziger Wert zur Priorisierung und Selektierung der Ressourcen verwendet wird, indem die Daten der Ressourcen nach dem Zahlenwert des Prioritätsindex geordnet und durch Auswahl der Ressourcen, welche die höchsten Werte des Prioritätsindex aufweisen, ausgegeben werden. Weitere vorteilhafte Ausgestaltung der Erfindung ergeben sich aus den Unteransprüchen.

Die Bildung eines neuen einzigen Datenindex als Prioritätsindex, welcher durch Verdichtung verschiedener Unterindices, die aus Regel- und Entscheidungseingangsgrößen gebildet werden, erhalten wird, bedeutet, dass die dazu gehörigen Daten schnell unter Heranzierung des neu gebildeten Datenindex als Prioritätsindex ausgewählt werden können.

In dem erfindungsgemäßen Verfahren werden unterschiedliche Parameter, die aufgrund unterschiedlicher physikalischer, technischer, kaufmännischer oder statistischer Dimensionen nicht direkt aufsummierbar sein können, durch das Inverhältnissetzen des Abstandes zum Mittelwert mit der Standardabweichung dimensionslos gemacht, wobei auch unterschiedliche Parametertypen, welche unterschiedliche mittlere Größenordnungen aufweisen können, in ein ausgewogenes Verhältnis zueinander gebracht werden. Die Eingangsdaten in das erfindungsgemäße Verfahren können somit neben technischen Daten in Form von Maßen, Größen, Zustandsdaten auch kaufmännische Daten oder auch statistische Daten oder Marktforschungsdaten sein. Besonders ist, dass unterschiedliche Datentypen durch das erfindungsgemäße Verfahren miteinander gemischt werden können, ohne dass ein zugrundeliegendes theoretisches oder quantitatives Modell der gegenseitigen Wechselwirkung dieser Parameter vorhanden sein muss.

Durch die Entdimensionierung und durch das Auswiegen der unterschiedlichen Parameter können solche Regel- und Entscheidungseingangsgrößen gegeneinander ausgewogen und im Extremfall auch nihiliert werden, die unter Anwendung mehrerer einzelner automatisierter und voneinander abgegrenzter Entscheidungslogiken zu stark widersprüchlichen automatisierten Priorisierungs- und Selektierungsentscheidungen führen würden.

Eine durch das erfindungsgemäße Verfahren geordnete Datenmenge kann zu industriellen und technischen Steuerungen eingesetzt werden, wo eine schnelle Priorisierungs- und Selektierungsentscheidung unter Hinzuziehung einer großen Menge einzelner Regel- und Entscheidungseingangsgrößen gebildet werden muss.

Dabei ist es von Vorteil, wenn die einzelnen Quotienten $Q_{i,k}$ zur Bildung der Einzelelemente $I_i$ eine zusätzliche Wichtung erhalten. Dies geschieht in vorteilhafter Weise dadurch, das jeder einzelne Quotienten $Q_{i,k}$ durch einen linearen Faktor $f_k$ gewichtet wird. Durch die Wichtung ist es möglich, die automatische Priorisierungs- und Selektierungslogik zu parametrisieren. Durch diese Parametrisierung ist es beispielsweise möglich, einzelnen Regel- und Entscheidungseingangsparametern einen Vorrang gegenüber ausgewählten anderen zu verleihen, so dass die Auswiegung sehr stark unterschiedlicher Regel- und Entscheidungseingangsparameter fein abgestimmt werden kann.

Des Weiteren ist es durch das erfindungsgemäße Priorisierungs- und Entscheidungsverfahren auch möglich, solche Parameter mit in die automatisierte Logik einzubeziehen, welche gegenüber anderen Regeleingangsparametern einen inversen Verlauf zeigen. Ein einmal bestimmter Parametersatz kann darauf hin in beliebig häufiger Zahl zum erfindungsgemäßen Verfahren in automatisierter Weise eingesetzt werden.

Als Beispiel hierfür sei genannt: Ein erster besonders kleiner Eingangswert soll bei alleiniger Betrachtung zu einem besonders großen Prioritätsindexeinzelwert führen und umgekehrt und ein zweiter besonders großer Wert soll bei alleiniger Betrachtung ebenso zu einem besonders großem Prioritätsindexeinzelwert und umgekehrt führen. Bei einer Gleichbehandlung durch eine Wichtung beziehungsweise Parameterisierung der Bildung des neuen Prioritätsindex ist es möglich, gegebenenfalls widersprüchliche Ergebnisse, die bei alleiniger und voneinander isolierter Hinzuziehung jeweils eines Eingangsparameters erzeugt werden müssten, aneinander anzupassen, so dass diese sich gegenseitig aufwiegen oder gar nihilieren.

Dabei hat es sich besonders vorteilhaft erwiesen, wenn der erfindungsgemäß gebildete Prioritätsindex I zum Gebrauch in elektronischen Datenverarbeitungsanlagen normiert wird. Normierung im Kontext dieses Dokumentes bedeutet, dass ein zahlenmäßiges Einzelergebnis durch Subtraktion des kleinsten Prioritätsindexeinzelelementes aller Prioritätsindexeinzelelemente auf der Ergebnisskala, dem Zahlenintervall, der alle Prioritätsindexeinzelelemente umfasst, so verschoben wird, dass das kleinste Prioritätsindexeinzelelement gleich Null wird und alle so erhaltenen einzelnen Zwischenergebnisse durch das so erhaltene größte einzelne Zwischenergebnis dividiert werden. Das Ergebnis ist ein Prioritätsindex, welcher als kleinsten Prioritätsindexeinzelwert den Zahlenwert null und als größten solchen den Zahlenwert eins aufweist. Eine Priorisierung beziehungsweise Selektierung der einzelnen industriellen oder technischen Ressourcen ist so maschinell leicht durchführbar.

Erfindungsgemäß werden die Ressourcen automatisch priorisiert und selektiert, welche einen durch das erfindungsgemäße Verfahren gebildeten und höchsten Prioritätsindexeinzelwert aufweisen. Durch die Anwendung des erfindungsgemäßen Verfahrens zur Verdichtung verschiedener Unterindices wird ein neuer Prioritätsindex gebildet, der den in einer Datenbank einer elektronischen Datenverarbeitungsanlage vorgehaltenen Daten über industrielle oder technische Ressourcen einen besonders hohen Wert zuweist, bei welchem die erfindungsgemäß verdichteten Einzelindices das für die Priorisierungs- und Selektionsentscheidung günstigste Verhältnis aufweisen. Das hier angeführte günstigste Verhältnis kann dabei vorher durch implizite Parametrisierung vorbestimmt werden und danach beliebig oft im automatisierten Verhältnis genutzt werden. Das erfindungsgemäße Verfahren erleichtert somit einem Anwender des Verfahrens bei einer einmaligen Parametrisierung der Wichtungsfaktoren und anschließender automatisierten Verwendung der Wichtungsparameter, statt alle konkrete Eingangsparameterkombinationen vorherzusehen und ein Ergebnis dafür vorzubestimmen, nur die relative Wichtung eines Parameters gegenüber einem anderen Parameter festzulegen, was bei einer größeren Anzahl Eingangsparameter eine sehr große Erleichterung der notwendigen Konstruktionsarbeit des automatischen Priorisierungs- und Selektierungsautomaten bedeutet.

In vorteilhafter Weise können die einzelnen Unterindices, welche auf numerisch erfassbaren Werten der Entscheidungs- oder Regeleingangsparameter basieren, in zeitlich wiederkehrenden Abständen automatisch neu erfasst werden. Diese erfindungsgemäße Vorgehensweise hat sich besonders dann als vorteilhaft erwiesen, wenn die Änderung der Regel- und Entscheidungseingangsparameter zeitlichen Schwankungen unterliegt, wobei die Zeit für eine Änderung eines Regel- und Entscheidungseingangsparameters, welcher den erfindungsgemäß gebildeten Prioritätsindex verändern würde, wesentlich größer ist, als zur Priorisierungs- und Selektierungszeit nötig ist.

Ebenso hat es ich als vorteilhaft erwiesen, wenn die Wichtungsfaktoren $f_k$ zeitlich wiederkehrend neu bestimmt werden. Die Erfassung der Wichtungsparameter kann hierbei automatisch durch Rückführung der Priorisierungs- und Selektionsentscheidung des automatischen Systems als Feedback in die Regeleingangsgröße geschehen, es ist aber auch möglich, einen einmal gewählten Satz an Wichtungsfaktoren danach nur noch marginal anzupassen.

Erfindungsgemäß werden die so gebildeten Daten in dem Priorisierungs- und Entscheidungsautomat in Form einer elektronischen Datenverarbeitungsanlage so organisiert, dass diese im Speicher eine aufeinanderfolgende Anordnung aufweisen, die der numerischen Ordnung des erfindungsgemäß gebildeten Prioritätsindex *I* entspricht. Auf diese Weise ist es möglich, dem automatisierten System Daten über die industriellen oder technischen Ressourcen zu entnehmen, welche die höchste Priorität aufweisen, indem einfach die ersten der so angeordneten Daten ausgewählt werden.

Besonders vorteilhaft hat sich erwiesen, wenn die Daten in dem Element zur Ausführung des automatischen Priorisierungs- und Selektierungsverfahren so organisiert werden, dass die Daten mit Speicherzeigern verknüpft werden, statt die Daten selbst zu Ordnen, wobei die Zeiger auf die Daten der industriellen oder technologischen Ressourcen zeigen, welche das nächst größere und das nächst kleinere Prioritätsindexeinzelelement aufweisen.

Besonders bevorzugt ist eine Verknüpfung der Daten über industrielle oder technische Ressourcen mit den Daten, welche ein Prioritätsindexeinzelelement aufweisen, dessen numerischer Wert dem Median aller Prioritätsindexeinzelelemente entspricht, die größer als das Prioritätsindexeinzelelement des zu verknüpfenden Datums sind und gleichzeitig eine weiterer Zeiger auf das Datum zeigt, welches ein Prioritätsindexeinzelelement aufweist, dass dem Median aller Prioritätsindexelemente entspricht, die kleiner sind als das Prioritätsindexeinzelelement des zu verknüpfenden Datums.

Durch diese Verknüpfung der Daten über industrielle oder technologische Ressourcen ist es möglich, ein besonders schnellen Zugriff auf technologische oder industrielle Ressourcen zu ermöglichen, welche einen erfindungsgemäß gebildeten Prioritätsindex in einem vorgewählten Intervall aufweisen. Durch die Medianverknüpfung wird besonders bei einer sehr großen Anzahl industrieller oder technologischer Ressourcen ermöglicht, dass die Datenbank maximal soviel Suchschritte zur Auffindung eines Datums mit Prioritätseinzelelement im gewählten Intervall durchführen muss, die dem Logarithmus zur Basis 2 der Anzahl der zu durchsuchenden Elemente entspricht.

Zur Durchführung des Verfahrens kann eine elektronische Datenverarbeitungsanlage eingesetzt werden, welche ein Programm abarbeitet, in dem das erfindungsgemäße Verfahren implementiert ist. Die elektronische Datenverarbeitungsanlage indiziert dabei die elektronisch verfügbaren Daten simultan aus den mehr als einem Unterindex, welcher durch die zahlenmäßige Repräsentation der die industriellen oder technischen Ressourcen charakterisierten Parameter gebildet wird. In bevorzugter Weise kann das erfindungsgemäße Verfahren auch durch einen elektronischen Datenverarbeitungsanlagenverband durchgeführt werden, wobei eine erste elektronische Datenverarbeitungsanlage die Indizierung durchführt und eine zweite elektronische Datenverarbeitungsanlage die Daten vorhält. Hierzu können die Datenverarbeitungsanlagen ständig oder auch temporär durch eine Kommunikationsinfrastruktur miteinander verbunden sein. Die Daten und das Programm zur Durchführung des erfindungsgemäßen Verfahrens können an unterschiedlichen Orten und auf unterschiedlichen Medien bereitgestellt werden, es ist aber auch möglich, Programm und Daten auf einem Medium zur Verfügung zu stellen. Im Falle von nicht veränderbaren Medien, wie beispielsweise ROM, CD-ROM oder DVD oder anderen nicht wiederveränderbaren Datenträgern können die Daten zur Aktualisierung auch geteilt vorgehalten werden, wobei unveränderte Daten weiterhin vom nichtveränderbaren Medium und durch Aktualisierung veränderte Daten auf einem weiteren veränderbaren Medium, wie bspw. Festplatten-Speicher, Flash-ROM, EEPROM vorgehalten werden.

Das erfindungsgemäße Verfahren kann zur Optimierung einer Ortsbestimmung eingesetzt werden. Beispielsweise ist es möglich, eine Datenbank mit unterschiedlichen Parametern abgegrenzter geographischer Gebiete zu füllen. Die so erstellte Datenbank wird in diesem Beispiel durch das erfindungsgemäße Verfahren unter Hinzuziehung des erfindungsgemäß gebildeten Prioritätsindex organisiert, sodass die Daten über die einzelnen geographischen Orte einen Prioritätsrang aufweisen. Dieses Verfahren wäre beispielsweise einsetzbar für Satelliten, die zur Erdbeobachtung eingesetzt werden und über eine variable Umlaufbahn verfügen. Hierzu ist es notwendig, schnell auf Ereignisse zu reagieren, die den Satelliten dazu veranlassen, seine Bahn zu verändern. Ebenso ist es möglich, geographische Ortsgebiete durch simultane Indizierung unterschiedlicher Parameter über diese Ortsgebiete so zu ordnen, dass hieraus eine automatische Standortentscheidung für ein Unternehmen ausgewählt werden kann, wobei die regelmäßig in das Verfahren einzuspeisenden Daten an die Priorisierungs- und Selektionsentscheidung entsprechend angepasst werden können. Des Weiteren ist es möglich, das erfindungsgemäße Verfahren zur Optimierung geographischer Ortsbestimmungen zur Steuerung von automatischen Transportflotten einzusetzen. Ein weiteres Beispiel für den Einsatz des erfindungsgemäßen Verfahren ist die Optimierung der geographischen Ortsbestimmung zur Steuerung von automatischen Aufklärungs-, -Luft- und Wasserfahrzeugen. Noch ein weiterer Einsatz des erfindungsgemäßen Verfahrens ist die Optimierung der Auslastung von Kommunikationsnetzen. Als Eingangsgrößen können hier beispielsweise dienen, die Leitungskapazität, die durchschnittliche Netzauslastung, die Durchleitungskosten, Latenzen und weitere das Kommunikationsnetz charakterisierende Parameter. Ebenso ist es möglich, mit dem erfindungsgemäßen Verfahren die Auslastung von Produktionsmaschinen zu steuern. Hierbei können die charakterisierende Parameter neben Maschinenkapazität und Auslastung auch Qualitätsdaten, Alter der Maschine, die Zeit, die seit dem letzten Wartungsintervall vergangen ist, und weitere maschinenindividuelle charakterisierende Daten sein.

**Patentansprüche**

**1.** Verfahren zum automatischen Priorisieren und Selektieren von industriellen oder technischen Ressourcen aus einer Gruppe durch deren simultane Indizierung unter Ausbildung eines Prioritätsindex I , wobei die Ressourcen durch mehr als einen Parameter charakterisiert sind und je ein Parametersatz gleichartiger Parameter unterschiedlicher Ressourcen als jeweils ein Unterindex $X_k$ in das Verfahren eingeht und der Prioritätsindex I unter Verdichtung der Unterindices $X_k$ gebildet wird, **gekennzeichnet durch**
die Bildung eines die $m$ verschiedenen Unterindices $X_k$ zusammenfassenden neuen Datenindex $I$ mit den Einzelelementen $I_i$ als Prioritätsindex **durch** eine elektronische Datenverarbeitungsanlage, wobei die Bildung die Aufsummierung aller $m$ einzelner Quotienten $Q_{i,k}$ aus je einer Differenz aus einem zu einem Datenpunkt $i$ gehörenden Einzelelement $x_{i,k}$ des Unterindex $X_k$ und Mittelwert $\bar{X}_k$ als Zähler und Standardabweichung $\sigma_{X_k}$ des Unterindex $X_k$ als Nenner gemäß folgender Beziehung aufweist,

$$I_i \;\square\; \sum_{k=1}^{m} f_k \, \frac{x_{i,k} - \bar{X}_k}{\sigma_{X_k}}$$

wobei "$\square$" für "aufweisend den davon rechts stehenden Term", $f_k$ für einen frei wählbaren Unterterm und $Q_{i,k}$ für den Quotient in der Summe steht und der so erhaltene Prioritätsindex als einziger Wert zur Priorisierung und Selektierung der Ressourcen verwendet wird, indem die Daten der Ressourcen nach dem Zahlenwert des Prioritätsindex geordnet und **durch** Auswahl der Ressourcen, welche die höchsten Werte des Prioritätsindex aufweisen, ausgegeben werden.

**2.** Verfahren nach Anspruch 1,
**gekennzeichnet durch**
eine zusätzliche Wichtung der einzelnen Quotienten $Q_{i,k}$ zur Bildung der Einzelelemente $I_i$, **durch** Einsatz eines linearen Faktors für $f_k$.

**3.** Verfahren nach einem der Ansprüche 1 bis 2,
**gekennzeichnet durch**
die Normierung des Prioritätsindex I **durch** Subtraktion des kleinsten Einzelelementes $I_i$ von allen Einzelelementen $I_i$ und anschließender Division aller so erhaltenen Werte **durch** die Differenz aus größtem so erhaltenen Wert und kleinsten so erhaltenen Wert als Teiler gemäß folgender Beziehung:

$$In_i \;\square\; \frac{I_i - \min(I_i)}{\max(I_i) - \min(I_i)}$$

wobei $In_i$ für die Einzelelemente des normierten Prioritätsindex $I$, "⊔" für "aufweisend den davon rechts stehenden Unterterm", $\min(I_i)$ für den kleinsten Wert aller Werte $I_i$ und $\max(I_i)$ für den größten aller Werte $I_i$ steht.

4. Verfahren nach einem der Ansprüche 1 bis 3, **gekennzeichnet durch** die automatische Selektierung der Ressourcen, welche die höchsten Werte der Einzelelemente $I_i$ des Prioritätsindex $I$ aufweisen.

5. Verfahren nach einem der Ansprüche 1 bis 4, **gekennzeichnet durch** eine zeitlich wiederkehrende Bestimmung und/oder Erfassung der Unterindices $X_k$.

6. Verfahren nach einem der Ansprüche 1 bis 5, **gekennzeichnet durch** eine zeitlich wiederkehrende Bestimmung und/oder Erfassung der Wichtungsfaktoren $f_k$.

7. Verfahren zur Optimierung der Speicherung von Daten in Datenbanken, wobei die Daten nach einem der Ansprüche 1 bis 6 inidiziert werden, **gekennzeichnet durch** eine aufeinanderfolgende Anordnung der Daten im Speicher, die einer numerischen Ordnung des gebildeten Index $I$ entspricht.

8. Verfahren zur Optimierung der Speicherung von Daten in Datenbanken, wobei die Daten nach einem der Ansprüche 1 bis 6 inidiziert werden, **gekennzeichnet durch** eine Verknüpfung der Daten im Speicher mit Zeigern auf das Datum mit dem nächst größeren und dem nächst kleineren Prioritätsindexeinzelelementes $I_i$ oder eine Verknüpfung der Daten im Speicher mit Zeigern auf jeweils das Datum, dessen Prioritätsindexeinzelelement $I_i$ dem Median aller Prioritätsindexeinzelelemente $I_i$ entspricht, die jeweils größer und jeweils kleiner sind als das Prioritätsindexeinzelelement $I_i$ des zu verknüpfenden Datums.

9. Elektronische Datenverarbeitungsanlage, welche elektronisch verfügbare Daten über industrielle oder technische Ressourcen durch Bildung eines Index $I$ aus mehr als einen Unterindex $X_k$ nach einem der Ansprüche 1 bis 8 simultan indiziert, priorisiert oder selektiert, wobei die Unterindices $X_k$ charakterisierende Parameter der Ressourcen sind.

10. Elektronischer Datenverarbeitungsanlagenverband, in welchem eine elektronische Datenverarbeitungsanlage industrielle oder technische Ressourcen gemäß einem der Ansprüche 1 bis 7 indiziert, priorisiert oder selektiert und mindesteins eine weitere elektronische Datenverarbeitungsanlage die zu den Ressourcen gehörenden Unterindices vorhält und zur Indizierung zur Verfügung stellt, wobei die unterschiedlichen Datenverarbeitungsanlagen durch eine Kommunikationsinfrastruktur zumindest zeitweise miteinander verbunden sind.

11. Datenträger, aufweisend ein Programm, in welchem das erfindungsgemäße Verfahren zur Abarbeitung durch eine elektronische Datenverarbeitungsanlage implementiert ist, einen entsprechenden Datensatz oder eine Kombination aus Programm und Datensatz.

12. Verwendung des Verfahrens nach einem der Ansprüche 1 bis 7 zur Optimierung einer Ortsbestimmung.

13. Verwendung des Verfahrens nach Anspruch 12 zur Optimierung geographischer Ortsbestimmungen zur automatischen Steuerung des Einsatzgebietes von Satelliten.

14. Verwendung des Verfahrens nach Anspruch 12 zur Optimierung geographischer Standortsbestimmungen von Unternehmen.

15. Verwendung des Verfahrens nach Anspruch 12 zur Optimierung geographischer Ortsbestimmungen zur Steuerung von automatischen Transportflotten.

16. Verwendung des Verfahrens nach Anspruch 12 zur Optimierung geographischer Ortsbestimmungen zur Steuerung von automatischen Aufklärungs-, Luft- und -Wasserfahrzeugen.

17. Verwendung des Verfahrens nach Anspruch 12 zur Optimierung der Auslastung von Kommunikationsnetzen.

18. Verwendung des Verfahrens nach Anspruch 12 zur Optimierung der Auslastung von Produktionsmaschinen.

**Geänderte Patentansprüche gemäss Regel 86(2) EPÜ.**

1. Verfahren zum automatischen Priorisieren und Selektieren von industriellen oder technischen Ressourcen aus einer Gruppe durch deren simultane Indizierung unter Ausbildung eines Prioritätsindex $I$, wobei die Ressourcen durch mehr als einen Parameter charakterisiert sind und je ein Parametersatz gleichartiger Parameter unterschiedlicher Ressourcen als jeweils ein Unterindex $X_k$ in das Verfahren eingeht und der Prioritätsindex $I$ unter Verdichtung der Unterindices $X_k$ gebildet wird,

**gekennzeichnet durch**

die Bildung eines die *m* verschiedenen Unterindices $X_k$ zusammenfassenden neuen Datenindex *I* mit den Einzelelementen $I_i$ als Prioritätsindex **durch** eine elektronische Datenverarbeitungsanlage, wobei die Bildung die Aufsummierung aller *m* einzelner Quotienten $Q_{i,k}$ aus je einer Differenz aus einem zu einem Datenpunkt *i* gehörenden Einzelelement $x_{i,k}$ des Unterindex $X_k$ und Mittelwert $\overline{X}_k$ als Zähler und Standardabweichung $\sigma_{X.}$ des Unterindex $X_k$ als Nenner gemäß folgender Beziehung aufweist,

$$I_i \ \square \ \sum_{k=1}^{m} f_k \frac{x_{i,k} - \overline{X}_k}{\sigma_{X_k}}$$

wobei "$\square$" für "aufweisend den davon rechts stehenden Term", $f_k$ für einen frei wählbaren Unterterm und $Q_{i,k}$ für den Quotient in der Summe steht und der so erhaltene Prioritätsindex als einziger Wert zur Priorisierung und Selektierung der Ressourcen verwendet wird, indem die Daten der Ressourcen nach dem Zahlenwert des Prioritätsindex geordnet und **durch** Auswahl der Ressourcen, welche die höchsten Werte des Prioritätsindex aufweisen, ausgegeben werden.

**2.** Verfahren nach Anspruch 1,
**gekennzeichnet durch**
eine zusätzliche Wichtung der einzelnen Quotienten $Q_{i,k}$ zur Bildung der Einzelelemente $I_i$, **durch** Einsatz eines linearen Faktors für $f_k$.

**3.** Verfahren nach einem der Ansprüche 1 bis 2,
**gekennzeichnet durch**
die Normierung des Prioritätsindex *I* **durch** Subtraktion des kleinsten Einzelelementes $I_i$ von allen Einzelelementen $I_i$ und anschließender Division aller so erhaltenen Werte **durch** die Differenz aus größtem so erhaltenen Wert und kleinsten so erhaltenen Wert als Teiler gemäß folgender Beziehung:

$$In_i \ \square \ \frac{I_i - \min(I_i)}{\max(I_i) - \min(I_i)}$$

wobei $In_i$ für die Einzelelemente des normierten Prioritätsindex I , "$\square$" für "aufweisend den davon rechts stehenden Unterterm", $\min(I_i)$ für den kleinsten Wert aller Werte $I_i$ und $\max(I_i)$ für den größten aller Werte $I_i$ steht.

**4.** Verfahren nach einem der Ansprüche 1 bis 3,
**gekennzeichnet durch**
die automatische Selektierung der Ressourcen, welche die höchsten Werte der Einzelelemente $I_i$ des Prioritätsindex *I* aufweisen.

**5.** Verfahren nach einem der Ansprüche 1 bis 4,
**gekennzeichnet durch**
eine zeitlich wiederkehrende Bestimmung und/oder Erfassung der Unterindices $X_k$.

**6.** Verfahren nach einem der Ansprüche 1 bis 5,
**gekennzeichnet durch**
eine zeitlich wiederkehrende Bestimmung und/oder Erfassung der Wichtungsfaktoren $f_k$.

**7.** Verwendung des Verfahrens nach einem der Ansprüche 1 bis 6 zur indizierten Anordnung von Daten in Datenbanken.

**8.** Verwendung des Verfahrens nach einem der Ansprüche 1 bis 6 zur Optimierung der Speicherung von Daten in Datenbanken.

**9.** Elektronische Datenverarbeitungsanlage, welche elektronisch verfügbare Daten über industrielle oder technische Ressourcen durch Bildung eines Index *I* aus mehr als einen Unterindex $X_k$ nach einem der Ansprüche 1 bis 8 simultan indiziert, priorisiert oder selektiert, wobei die Unterindices $X_k$ charakterisierende Parameter der Ressourcen sind.

**10.** Elektronischer Datenverarbeitungsanlagenverband, in welchem eine elektronische Datenverarbeitungsanlage industrielle oder technische Ressourcen gemäß einem der Ansprüche 1 bis 6 indiziert, priorisiert oder selektiert und mindesteins eine weitere elektronische Datenverarbeitungsanlage die zu den Ressourcen gehörenden Unterindices vorhält und zur Indizierung zur Verfügung stellt, wobei die unterschiedlichen Datenverarbeitungsanlagen durch eine Kommunikationsinfrastruktur zumindest zeitweise miteinander verbunden sind.

**11.** Datenträger, aufweisend ein Programm, in welchem das Verfahren gemäß Anspruch 1 bis 6 zur Abarbeitung durch eine elektronische Datenverarbeitungsanlage implementiert ist, einen entsprechenden Datensatz oder eine Kombination aus Programm und Datensatz.

**12.** Verwendung des Verfahrens nach einem der Ansprüche 1 bis 6 zur Optimierung einer Ortsbestimmung.

**13.** Verwendung des Verfahrens nach Anspruch 12 zur Optimierung geographischer Ortsbestimmungen zur automatischen Steuerung des Einsatzgebietes von Satelliten.

**14.** Verwendung des Verfahrens nach Anspruch 12 zur Optimierung geographischer Standortsbestimmungen von Unternehmen.

**15.** Verwendung des Verfahrens nach Anspruch 12 zur Optimierung geographischer Ortsbestimmungen zur Steuerung von automatischen Transportflotten.

**16.** Verwendung des Verfahrens nach Anspruch 12 zur Optimierung geographischer Ortsbestimmungen zur Steuerung von automatischen Aufklärungs-, Luft- und -Wasserfahrzeugen.

**17.** Verwendung des Verfahrens nach Anspruch 12 zur Optimierung der Auslastung von Kommunikationsnetzen.

**18.** Verwendung des Verfahrens nach Anspruch 12 zur Optimierung der Auslastung von Produktionsmaschinen.

**Europäisches Patentamt**

## EUROPÄISCHER RECHERCHENBERICHT

Nummer der Anmeldung

EP 04 00 4881

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | JÜRGEN SCHREIER: "Köpfchen statt Bauch" MM MASCHINENMARKT - DAS INDUSTRIEMAGAZIN, [Online] Nr. 7/2003, 6. Februar 2003 (2003-02-06), XP002290198 WÜRZBURG Gefunden im Internet: URL:http://www.maschinenmarkt.de/fachartikel/mm_fachartikel_180262.html> [gefunden am 2004-07-15] * das ganze Dokument * ----- | 1-7,12, 14 | G06F17/60 G06F17/30 |
| X | NR.: "Falsche Standortwahl häufig Ursache von Unternehmenskrisen" FRANKFURTER ALLGEMEINE ZEITUNG, [Online] 25. Juni 2003 (2003-06-25), XP002290199 FRANKFURT Gefunden im Internet: URL:http://wigeo8.geog.uni-hannover.de/aktuell/aktuell_mehr.php?id=89> [gefunden am 2004-07-15] * das ganze Dokument * ----- | 1-7,12, 14 | |
| X | WO 01/69329 A (CYRANO SCIENCES INC) 20. September 2001 (2001-09-20) * Zusammenfassung; Tabellen 7-10 * * Seite 3, Zeile 16 - Seite 4, Zeile 2 * * Seite 23, Zeile 19 - Seite 24, Zeile 8 * ----- | 1-11,18 | RECHERCHIERTE SACHGEBIETE (Int.Cl.7)  G06F |
| X | EP 1 191 459 A (NIGHTINGALE TECHNOLOGIES LTD) 27. März 2002 (2002-03-27) * Zusammenfassung; Abbildung 6 * * Absätze [0011], [0020] - [0023], [0028], [0069] - [0077] * ----- | 1-11,17 | |
| X | EP 0 660 211 A (EASTMAN KODAK CO) 28. Juni 1995 (1995-06-28) * Zusammenfassung; Ansprüche 1-9 * * Seite 2, Zeile 38 - Seite 3, Zeile 16 * ----- -/-- | 1-11,18 | |

Der vorliegende Recherchenbericht wurde für alle Patentansprüche erstellt

| Recherchenort | Abschlußdatum der Recherche | Prüfer |
|---|---|---|
| Den Haag | 28. Juli 2004 | Streit, S |

**Europäisches
Patentamt**

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 6 263 334 B1 (GEIGER DAN ET AL) 17. Juli 2001 (2001-07-17) * Zusammenfassung; Abbildungen 1-2ab * * Spalte 1, Zeile 1 - Spalte 3, Zeile 20 * ----- | 1-11 | |
| X | US 6 122 628 A (CASTELLI VITTORIO ET AL) 19. September 2000 (2000-09-19) * Zusammenfassung * * Spalte 1, Zeile 18 - Spalte 4, Zeile 54 * ----- | 1-11 | |

RECHERCHIERTE SACHGEBIETE (Int.Cl.7)

Der vorliegende Recherchenbericht wurde für alle Patentansprüche erstellt

| Recherchenort | Abschlußdatum der Recherche | Prüfer |
|---|---|---|
| Den Haag | 28. Juli 2004 | Streit, S |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 04 00 4881

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-07-2004

| Im Recherchenbericht angeführtes Patentdokument | | Datum der Veröffentlichung | Mitglied(er) der Patentfamilie | | | Datum der Veröffentlichung |
|---|---|---|---|---|---|---|
| WO 0169329 | A | 20-09-2001 | AU | 4733601 | A | 24-09-2001 |
| | | | CA | 2402280 | A1 | 20-09-2001 |
| | | | EP | 1264221 | A2 | 11-12-2002 |
| | | | WO | 0169329 | A2 | 20-09-2001 |
| | | | US | 2003109951 | A1 | 12-06-2003 |
| | | | US | 2003083756 | A1 | 01-05-2003 |
| | | | US | 2003144746 | A1 | 31-07-2003 |
| | | | US | 2002002414 | A1 | 03-01-2002 |
| EP 1191459 | A | 27-03-2002 | EP | 1191459 | A1 | 27-03-2002 |
| | | | AU | 8792101 | A | 02-04-2002 |
| | | | WO | 0225574 | A2 | 28-03-2002 |
| | | | JP | 2002109536 | A | 12-04-2002 |
| EP 0660211 | A | 28-06-1995 | US | 5442562 | A | 15-08-1995 |
| | | | AU | 680314 | B2 | 24-07-1997 |
| | | | AU | 8031994 | A | 15-06-1995 |
| | | | EP | 0660211 | A2 | 28-06-1995 |
| | | | JP | 7200040 | A | 04-08-1995 |
| US 6263334 | B1 | 17-07-2001 | WO | 0028441 | A2 | 18-05-2000 |
| US 6122628 | A | 19-09-2000 | CN | 1216841 | A | 19-05-1999 |
| | | | DE | 69802960 | D1 | 24-01-2002 |
| | | | DE | 69802960 | T2 | 29-08-2002 |
| | | | EP | 1025514 | A1 | 09-08-2000 |
| | | | WO | 9923578 | A1 | 14-05-1999 |
| | | | HU | 0100581 | A2 | 28-06-2001 |
| | | | IL | 131820 | A | 10-11-2002 |
| | | | JP | 3113861 | B2 | 04-12-2000 |
| | | | JP | 11242674 | A | 07-09-1999 |
| | | | PL | 340039 | A1 | 15-01-2001 |
| | | | TW | 410304 | B | 01-11-2000 |

EPO FORM P0461

Für nähere Einzelheiten zu diesem Anhang : siehe Amtsblatt des Europäischen Patentamts, Nr.12/82